# EUROPEAN PATENT SPECIFICATION

(11) **EP 1 138 466 B1**
(45) Date of publication and mention of the grant of the patent: **14.03.2007**
(21) Application number: 00830246.5
(22) Date of filing: 31.03.2000
(51) Int. Cl.: B29C 57/08

(54) **Pressurisable fluid operating head for automatic bell-mouth shaping machines for permanently providing a bell-mouth shape with gasket to terminal portions of plastic pipes**
Formwerkzeug mit Druckmittel, für automatische Muffenformmaschinen, zum bleibenden Formen von Muffen mit Dichtung an Kunststoff-Rohrenden
Tête de formage pour machines de tulipage automatique utilisant un fluide pressurisé, pour le formage permanent de tulipes comprenant un joint sur l'extrémité de tubes en matière plastique

(43) Date of publication of application: 04.10.2001
(73) Proprietor: SICA S.P.A., 48011 Alfonsine (Ravenna) (IT)
(72) Inventor: Savioli, Leopoldo, 48011 Alfonsine (IT)
(74) Representative: Lanzoni, Luciano

(56) References cited:
- EP-A- 0 700 771
- JP-A- 60 031 945
- US-A- 3 929 958

## Description

The present invention relates to a pressurised fluid operating head for permanently providing a bell-mouth shape to terminal portions, equipped with gasket seats, of pipes made of plastic material, in automatic bell-mouth shaping machines, comprising:
- a shaped forming drift, able to be inserted in a terminal portion of the pipe, comprising a first anterior portion with a nominal diameter corresponding to that of the pipe and a second portion consecutive to the first and with greater nominal diameter, corresponding to that of the terminal portion of the pipe, the drift being provided with conduits, exiting from its own lateral surface, for feeding a first pressurised fluid provided for carrying out a first phase of dilating outwards the end portion of the pipe, after the latter has been fitted onto the drift;
- at least two half-moulds, surrounding the drift and movable from a first position distanced from the drift, in which one of their cavities receives or releases the end portion of the pipe, to a second position, closed on the drift, wherein a shaped interior surface of the half-moulds, comprising a radial cavity, able to delimit exteriorly the shape of an annular seat of the terminal portion of the pipe, where a sealing gasket is destined to be located, limits said first dilation phase and provides conduits for a second pressurised fluid provided for carrying out a second phase of forced radial contraction towards the drift, of the same terminal portion of the pipe, after the first dilation phase;
- a flange mounted coaxially and slidingly relative to the drift and to the half-moulds, and having a front stop surface of the edge of the terminal portion of the tube at the end of its insertion on the drift;
- sealing elements destined to interact both with the inner surface and with the outer surface of the terminal portion of the pipe, located respectively both on the lateral surface of the drift, and on the inner surface of the half-moulds, allowing said pipe to be inserted in a sealed manner into the operating head;
- the half-moulds, the drift and the flange delimiting together and peripherally a first pressurisation chamber able to allow the first dilation phase, positioned between the lateral surface of the drift and the inner surface of the pipe, as well as a second pressurisation chamber, able to allow the second contraction phase, positioned between the outer surface of the pipe and the inner surface of the half-moulds.

In processing thermoplastic pipes destined for the manufacture of conduits for feeding and discharging fluids, used for instance in the construction industry, bell-mouth moulding machines are used to obtain, in correspondence with an end portion of the pipes, the characteristic coupling bell-mouths used to connect in succession various pipe elements, in order to obtain conduits of the required length.

In bell-mouth moulding machines, the aforesaid pipes are associated to particular operating heads which, using shaped drifts operating in combination with moulding chambers, shape the heated pipe and then cool it within the head in order to render permanent the imparted shape.

An operating head of the aforementioned type is already known from document DE-A-2225123. This head is activated by a pressurisable fluid; it provides bell-mouth shapes to end portions of plastic pipes in automatic shaping machines. It comprises a die provided with a receiving cavity, to receive a portion of thermally plasticised pipe, having a shaped inner surface, a moulding drift, able to be inserted into the end portion of the pipe, centrally positioned relative to the die, and provided with conduits for feeding a pressurisable fluid ending from the lateral surface, a flange mounted coaxially and slidingly relative to the drift and to the die, and having a stop surface able to be associated to an edge of the end portion of the tube; sealing elements located on the lateral surface of the drift and destined to interact with the inner surface of the pipe portion; the die, the drift and the flange together delimiting, peripherally, a chamber for forming the end portion of the pipe which comprises a pressurisation chamber positioned between the lateral surface of the drift and the inner surface of the pipe.

Pipes made of polyvinylchloride, of ABS, or of materials having similar characteristics, when shaped with known operating head, during the cooling operation following the moulding of the bell-mouths exhibit a natural shrinkage whereupon the bell-mouths are stabilised assuming their definitive shape and dimensions, which remain substantially unaltered over time. The coupling junction of the pipe portions therefore never becomes problematic after a long storage period or even after a prolonged exposure to heat sources, as occurs for instance if the pipes are exposed to intense direct sunlight.

This dimensional and geometric stability, in the current art, is not as easily obtainable when forming bell-mouths in polyethylene (PE) or polypropylene (PP) pipes.

The pipes made from this material, at the end of the bell-mouth shaping process conducted in a conventional bell-mouth shaping machine, remain in an apparently stable internal tension state which, as soon as the pipe is subjected to sun rays or to hostile thermal conditions, causes the resumption of the contraction phenomenon, whereby the final dimensions of the bell-mouth are incompatible with the tolerances prescribed for proper mounting.

The instability and the extreme difficulty in controlling the shrinkage of the bell-mouth shaped portion of the pipe would not allow, in practice, to use the bell-mouth shaping method described above for polyethylene pipes.

Said material, however, does have advantageous characteristics in terms of duration, weight, flexibility for being adapted while in use which, in spite of the higher cost of the raw material, drive the high demand for the product on the market.

The demand for pipes of such characteristics is met by normally adopting special equipment, totally different from bell-mouth shaping machines in constructive terms. Said equipment requires costly constructive processes which substantially comprise the preparation of the pipe and of the bell mouth in separate parts and their subsequent sealing in place by specialised personnel.

The Applicant itself has therefore perfected an operating head able to solve the aforesaid problems, synthetically described in the foreword and in the preamble to the main claim. This solution is clearly described in document EP-0 700 771 which discloses an operating head according to the preamble of claim 1.

It provides an excellent solution to all the problems of the dimensional and geometric stability of the terminal portions of pipes, also and especially those made of polyethylene, polypropylene and the like, providing first for a pre-set forced dilation of the component molecules of the material, without breaking the bonds and then to a subsequent contraction thereof, bringing back and ordering the molecules to the required nominal diameter (which in any case is greater than the original diameter of the pipe) determined by the drift, making the process faster with pressurised fluids. In this technique, it is clearly important to determine with the utmost precision the extent of the dilation, since the contraction will have to occur to the nominal pre-set diameter.

However, this solution also has some limitations.

It does not, for instance, allow to act on terminal pipe portions fitted onto drifts of the type found in the document US. 3.929.958, which preventively and temporarily supports, in a removable manner in one seat, the gasket which shall then be stably located inside the seat obtained on the moulded terminal portion, extracting it from the drift. In this solution, the gasket mounted on the drift is stopped by a flange positioned at the opposite part relative to the entrance of the terminal portion of pipe which is fitted on the drift itself, thereby maintaining it in its seat, at least until the edge of the terminal pipe portion has surmounted first and then overtaken the gasket, freely lying on the underlying flange. Thereupon the flange is made to move rearwards, so that the edge of the terminal portion contracts, by natural contraction, on the original surface of the underlying drift and lastly the drift is extracted and therefrom the gasket is removed, which remains inside the terminal portion of the pipe, which in the meantime has sufficiently consolidated. It should be clarified that at the time of this patent document the aforesaid stabilisation technique for plastic material was unknown. Moreover, the dilation that the edge of the terminal portion necessarily underwent was totally incidental and hence not pre-determined.

After the premises above, it is thus clarified that a drift of the type illustrated above cannot be used in the Applicant's solution, since it is designed to shape the seat of the gasket of the terminal portions with inner drifts of the type without gaskets, with the stop flange also being unsuitable.

Moreover, in this occasion, wrinkles have formed inside the terminal portion, in correspondence with the extreme edge, where it is placed in contact with the aforesaid flange and the dimensional stability of said edge is not always optimal. The flange is cold or heated with band armoured resistors which, because of their size, are necessarily located distant from the heating area, whereon instead the heat should be located.

The aim of the present invention is to overcome the drawbacks lamented above.

These aims and others besides, which shall become more readily apparent in the course of the description that follows, are reached, in accordance with the present invention, by an enhanced operating head with pressurisable fluid as set out in the claims.

The fundamental advantage obtained by means of the invention consists essentially of the fact that it enables to form bell-mouths in polyethylene pipes in shapes and dimensions that are stable over time, also adopting drifts of the type comprising a seat for supporting the sealing gasket, therein preliminarily positioned in a temporary manner.

An additional considerable advantage is that of providing a highly concentrated system for heating the flange, exploiting a heated fluid, blown directly onto the flange.

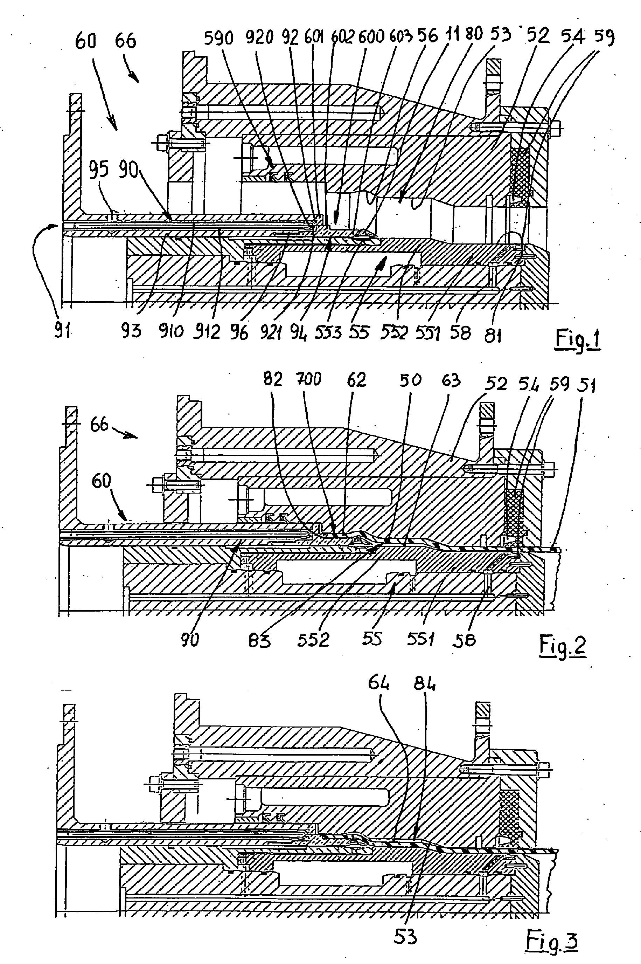

Further features and advantages of the invention shall become more readily apparent from the detailed description that follows, illustrated purely by way of non limiting indication in the accompanying drawings in which Figures 1,2,3,4,5 and 6, are partially sectioned lateral views of the operating head, in various operative phases of a work cycle.

With reference to the aforementioned figures, the operating head (66) in question comprises a shaped forming drift (55), whereon a terminal portion (50) of the pipe (51) is fitted, comprising a first anterior portion (551) whose nominal diameter corresponds to that of the pipe (51) and a second portion (552) consecutive to the first and with greater nominal diameter, corresponding to the one to be obtained on the formed portion (50).

The drift (55) is provided with conduits (58), exiting from its own lateral surface (81), for feeding a first pressurised fluid provided for carrying out a first outward dilation phase of the end portion (50) of the pipe (51).

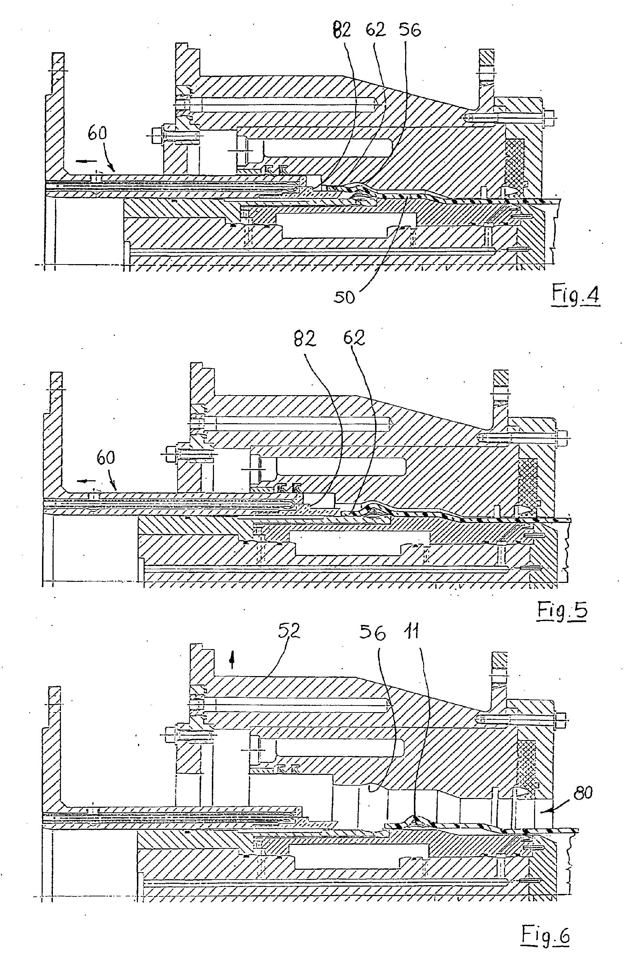

The head (66) also comprises at least two half-moulds (52), surrounding the drift (55) and movable from a first position distanced from the drift (55), in which their cavity (80) receives (Fig. 1) or releases (Fig. 6) the end portion (50) of the pipe (51), to a second position, closed on the drift (55) - see Figs. 2, 3, 4 and 5. The half-moulds (52), which limit the first dilation phase, comprise an inner surface (53) shaped according to the outer shape of the formed terminal portion, also comprising a radial cavity (56), able to delimit externally the shape of the annular seat which the terminal portion (50) of the pipe (51) will comprise after the shaping, for the stable placement of a sealing gasket (11). The half-moulds comprise conduits (54) for a second pressurised fluid provided for performing a second phase of forced radial contraction towards the drift (55), of the same terminal portion (50) of the pipe (51), after the first dilation phase.

The half-moulds (52), the drift (55) and a flange (60) together and peripherally determine a first pressurisation chamber (Fig. 2) able to allow the first dilation phase, positioned between the lateral surface (81) of the drift (55) and the inner surface (83) of the pipe (51), as well as a second pressurisation chamber (Fig. 3), able to allow the second contraction phase, positioned between the outer surface (84) of the pipe (51) and the inner surface (53) of the die (52).

Suitable sealing elements (59) are destined to interact both with the inner surface (83) and with the outer surface (84) of the terminal portion (50) of the pipe (51). They are located respectively both on the lateral surface (81) of the drift (55), and on the inner surface (53) of the half-moulds (52), allowing the pipe (51) to be inserted in a sealed manner into the operating head (66).

The operating head (66) of the invention is enhanced because it is able to operate with drifts (55) of the type comprising a seat (553) for the sealing gasket (11), therein preliminarily positioned in temporary fashion.

To be able to operate with these kinds of drift, the flange (60), mounted advantageously in a single piece and coaxially and slidingly relative to the drift (55) and to the half-moulds (52), has (Fig. 2) a frontal stop surface (82) of the edge (62) of the terminal portion (50) of the pipe (51), operating upon the completion of its insertion on the drift (55) and presents its own extremity (600), oriented towards the terminal portion (50) of the pipe (51), shaped at least according to a double step (602, 603).

The vertical wall of the outer step (602), in combination with the horizontal superior wall of the underlying inner step (603), positioned downstream and in contact with the gasket (11) and with that part of the shaped inner surface (53) of the half-moulds (52) in closed position on the drift (55), which corresponds to said horizontal superior wall of the step (603), identifies a particular cylindrical (700) seat (Figs. 2,3), destined to receive and frontally stop the edge (62) of the terminal portion (50) of the pipe (51), with said frontal stop surface (82), identified by the vertical wall of the step (602) itself. It has a pre-set constant minimum diameter, greater than the nominal diameter of the second portion (552) of the drift with greater diameter and also has a thickness approaching that of the edge (62) of the terminal portion (50) of the pipe (51). The thickness of said inner step (603) of the flange (60) is such as to assure, simultaneously, the exact pre-set measurement of the constant minimum diameter of the cylindrical seat (700) for receiving the edge (62) of the terminal portion (50) of the pipe (51) and the seated stability of the gasket (11). In this way the flange (60) on the one hand effectively holds the gasket (11) and on the other determines the minimal dilation which the edge (62) of the terminal portion (50) of the pipe must undergo, thereby establishing a precise minimum dilation limit for the edge (62), which thus allows an equally precise dimensional stabilisation of the extreme edge of the portion (50), which is the most difficult one to stabilise. Subsequently, when the contraction phase is still on-going, and moulding has been completed, the flange (60) moves backwards (Figs. 4 and 5), until the edge (62) is completely released from the flange and in particular from the underlying step (603), rapidly contracting and adhering onto the shaped surface of the underlying drift (55) and the half-moulds (52) reopen, for a new cycle. During the whole process, the flange (60) is subjected to a heating system (90) concentrated in correspondence with its own extremity (600) which is in direct contact with the terminal portion (50) of the pipe (51), able to be activated at least during the phase whereby the terminal portion (50) of the pipe (51) is introduced on the drift (55).

This concentrated heating system (90) entails a forced circulation of a heated fluid inside the flange (60), which transfers heat concentrated exclusively in correspondence with the extremity (600) of the flange (60).

More specifically, the concentrated heating system (90) develops along a cylindrical segment (93) of the flange (60), internally provided with at least a first longitudinal seat (91) for a first corresponding ducting (910) ending, in correspondence with the free end of the same cylindrical segment, into at least a second annular ducting (920), which in turn is seated in a second circumferential seating (92). The latter is delimited and closed by a cover (94) coinciding with said extremity (600) of the flange (60).

This cover (94) is preferably able to be associated in sealed fashion with said cylindrical segment (93) by means of simple screwing-on along a corresponding thread (96).

The ducts are travelled by a heated fluid (preferably air), distributed directly and uniformly on the extremity (600) of the flange (60), through a plurality of small holes (921) obtained circumferentially on the second annular ducting (920), in the direction of the extremity (600) of the flange (60).

The return of the fluid towards the exterior (normally into the atmosphere) takes place through the gap (912) itself which exists between the ducts (910, 920) and their respective seats (91, 92), finding free release in an outlet hole (95), obtained transversely along the cylindrical segment (93) of the flange (60).

The extremity (600) of the flange (60) preferably presents a third step (601) exterior to the other two, able to recover the total size of the thickness of the cylindrical segment (93) of the flange (60), containing said seats and ducts.

Lastly, it should be noted that, whereas during the dilation phase the seal of the first pressurisation chamber (63), in correspondence with the edge (62), is achieved directly by the edge itself, the seal of the second pressurisation chamber (64) is achieved by additional sealing gaskets (590), positioned in correspondence with the shaped surface (53) of the half-moulds (52) and interacting with the outer surface of the cylindrical segment (93).

## Claims

1. Pressurisable fluid operating head for providing permanent bell-mouth shapes to terminal portions, provided with gasket seats, of pipes made of plastic material, in automatic bell-mouth shaping machines, comprising:
- a shaped forming drift (55), able to be inserted into a terminal portion (50) of the pipe (51), comprising a first anterior portion (551) with nominal diameter corresponding to that of the pipe (51) and a second portion (552) consecutive to the first and with greater nominal diameter, corresponding to that of the terminal portion (50) of the pipe (51), the drift (55) being provided with conduits (58), exiting from its own lateral surface (81), for feeding a first pressurised fluid provided to out a first phase of dilating outwards the end portion (50) of the pipe (51), after it has been fitted onto the drift;
- at least two half-moulds (52), surrounding the drift (55) and movable from a first position distanced from the drift (55), in which their cavity (80) receives or releases the end portion (50) of the pipe (51), to a second position, closed on the drift (55), in which their shaped inner surface (53), comprising a radial cavity (56), able to delimit externally the shape of an annular seat [(500)] of the terminal portion (50) of the pipe (51), where a sealing gasket (11) is destined to be placed, limits said first dilation phase and provides conduits (54) for a second pressurised fluid provided to carry out a second phase of forced radial contraction towards the drift (55), of the same end portion (50) of the pipe (51), after the first dilation phase;
- a flange (60) mounted coaxially and slidingly relative to the drift (55) and to the half-moulds (52), and having a frontal stop surface (82) of the edge (62) of the terminal portion (50) of the pipe (51) at the completion of its insertion on the drift (55);
- sealing elements (59) destined to interact both with the inner surface (83), and with the outer surface (84) of the terminal portion (50) of the pipe (51), located respectively both on the lateral surface (81) of the drift (55), and on the inner surface (53) of the half-moulds (52), allowing said pipe (51) to be inserted in sealed fashion into the operating head (60);
- the half-moulds (52), the drift (55) and the flange (60) delimiting together and peripherally, a first pressurisation chamber (63) able to allow the first dilation phase, positioned between the lateral surface (81) of the drift (55) and the inner surface (83) of the pipe (51), and a second pressurisation chamber (64), able to allow the second phase of contraction, positioned between the outer surface (84) of the pipe (51) and the inner surface (53) of the half-moulds (52);
**characterised in that** the drift (55) is of the type comprising a seat (553) for the sealing gasket (11), therein preliminarily placed in temporary fashion, and **in that** the flange (60) comprises a heating system (90) and has an extremity (600) of its own oriented towards the terminal portion (50) of the pipe (51) and shaped at least with a double step (602,603) having an outer step (602) and an inner step (603) and in which the vertical wall of the outer step (602), in combination with the horizontal superior wall of the underlying inner step (603) and with that part of the shaped inner surface (53) of the half-moulds (52) which, when the half-moulds (52) are in closed position on the drift (55), corresponds to said horizontal superior wall of the underlying inner step (603), identifies a cylindrical seat (700) having a constant pre-set minimum diameter that is greater than the nominal diameter of the second portion (552) of the drift with greater diameter, said cylindrical seat (700) having its thickness approaching that of the edge (62) of the terminal portion (50) of the pipe (51), said cylindrical seat (700) being destined to receive and to stop frontally said edge (62) with said front stop surface (82), identified by the vertical wall of the step (602) itself; said underlying inner step (603) being located downstream of and against the gasket (11).

2. An operating head as claimed in claim 1, **characterised in that** the thickness of said inner step (603) of the flange (60) is such as to assure, simultaneously, the exact pre-set measure of the constant minimum diameter of the cylindrical seat (700) for housing the edge (62) of the terminal portion (50) of the pipe (51) and the seated stability of the gasket (11).

3. An operating head as claimed in claim 1, **characterised in that** the heating system (90) is concentrated in correspondence with its own extremity (600) which is in direct contact with the terminal portion (50) of the pipe (51), able to be activated at least during the introduction of the terminal portion (50) of the pipe (51) on the drift (55).

4. An operating head as claimed in claim 3, **characterised in that** the concentrated heating system (90) is constituted by a forced circulation of a heated fluid inside the flange (60), which transfers heat concentrated exclusively in correspondence with the extremity (600) of the flange (60).

5. An operating head as claimed in claim 4, **characterised in that** the flange (60) comprises a cover (94) for closing the heating system (90).

6. An operating head as claimed in claim 5, **characterised in that** the concentrated heating system (90) develops along a cylindrical segment (93) of the flange (60), provided internally with at least a first longitudinal seat (91) for a first corresponding ducting (910) ending, in correspondence with the free end of the same cylindrical segment, in at least a second annular ducting (920), which in turn is housed in a second circumferential seat (92) delimited and closed by the cover (94) coinciding with said extremity (600) of the flange (60), the ducts being travelled by a heated fluid, distributed directly and uniformly on the extremity (600) of the flange (60) through a plurality of small holes (921) obtained circumferentially on the second annular ducting (920), in the direction of the extremity (600) of the flange (60).

7. An operating head according to claim 6, **characterised in that** the return of the fluid towards the exterior takes place through the gap (912) which exists between the ducts (910, 920) and their respective seats (91, 92), finding free release in an outlet hole (95), obtained transversely along the cylindrical segment (93) of the flange (60).

8. An operating head as claimed in claim 6, **characterised in that** the extremity (600) of the flange (60) which constitutes the cover (94) of the second circumferential seat (92) obtained at the end of the cylindrical segment (93) of the flange (60) itself, can be associated in sealed fashion with said cylindrical segment (93) by simple screwing-on along a corresponding thread (96).

9. An operating head as claimed in claim 8, **characterised in that** the extremity (600) of the flange (60) presents a third step (601) exterior to the other two, able to recover the total size of the thickness of the cylindrical segment (93) of the flange (60), containing said seats and ducts.

10. An operating head as claimed in any of the claims 5, 6, 7, 8 or 9, **characterised in that** it comprises additional sealing gaskets (590), positioned in correspondence with the shaped surface (53) of the half-moulds (52) and interacting with the outer surface of the cylindrical segment (93).

11. An operating head as claimed in any of the previous claims, **characterised in that**, during the last part of the contraction phase, the flange (60) moves backwards, until the edge (62) is completely released from the underlying step (603), rapidly contracting and adhering onto the shaped surface of the underlying drift (55) and the half-moulds (52) re-open, for a new cycle.

## Patentansprüche

1. Formwerkzeug mit unter Druck stehendem Fluid für automatische Muffenmaschinen zum dauerhaften Formen von Muffen, versehen mit Dichtungssitzen, an den Endabschnitten von Kunststoffrohren, enthaltend:
- einen profilierten Formdorn (55), der in einen Endabschnitt (50) des Rohres (51) eingeschoben werden kann, enthaltend einen ersten vorderen Abschnitt (551) mit einem Nenndurchmesser, der dem des Rohres (51) entspricht, und einen zweiten Abschnitt (552), anschliessend an den ersten, mit einem grösseren Nenndurchmesser, entsprechend dem des Endabschnittes (50) des Rohres (51), wobei der Dom (55) mit Leitungen (58) versehen ist, die aus seiner seitlichen Oberfläche (81) austreten, um ein erstes unter Druck stehendes Fluid zuzuführen, dazu vorgesehen, eine erste Phase der Aufweitung des Endabschnittes (50) des Rohres (51) nach aussen zu bewirken, nachdem letzterer auf den Dom aufgezogen worden ist;
- wenigstens zwei Halbformen (52), die den Dom (55) umgeben und beweglich sind aus einer ersten, von dem Dom (55) abstehenden Position, in welcher deren Vertiefung (80) den Endabschnitt (50) des Rohres (51) aufnimmt oder freigibt, in eine zweite, um den Dom (55) geschlossene Position, in welcher deren profilierte innere Oberfläche (53), enthaltend eine radiale Vertiefung (56), die aussen die Form eines ringförmigen Sitzes [(500)] des Endabschnittes (50) des Rohres (51) abgrenzt, die zum Einsetzen einer Dichtung (11) bestimmt ist, die genannte erste Aufweitungsphase begrenzt und Leitungen (54) für ein zweites unter Druck stehendes Fluid aufweist, vorgesehen zum Ausführen einer zweiten Phase der forcierten radialen Kontraktion in Richtung des Doms (55) desselben Endabschnittes (50) des Rohres (51), und zwar nach der ersten Aufweitungsphase;
- einen Flansch (60), montiert koaxial und gleitbar im Verhältnis zu dem Dom (55) und zu den Halbformen (52), welcher eine vordere Anschlagfläche (82) für die Kante (62) des Endabschnittes (50) des Rohres (50) am Ende von dessen Aufziehen auf den Dom (55) hat;
- Dichtungselemente (59), dazu bestimmt, mit der inneren Oberfläche (83) und mit der äusseren Oberfläche (84) des Endabschnittes (50) des Rohres (51) zusammenzuwirken, angeordnet jeweils an der seitlichen Oberfläche (81) des Doms (55) und an der inneren Oberfläche (53) der Halbformen (52), wobei es dem genannten Rohr (51) erlaubt ist, in abgedichteter Weise in das Formwerkzeug (66) eingesetzt zu werden;
- wobei die Halbformen (52), der Dom (55) und der Flansch (60) zusammen und umlaufend eine erste Druckkammer (63) abgrenzen, in der Lage, die erste Aufweitungsphase zu erlauben, positioniert zwischen der seitlichen Oberfläche (81) des Doms (55) und der inneren Oberfläche (83) des Rohres (51), sowie eine zweite Druckkammer (64), in der Lage, die zweite Kontraktionsphase zu erlauben, positioniert zwischen der äusseren Oberfläche (84) des Rohres (51) und der inneren Oberfläche (53) der Halbformen (52);
**dadurch gekennzeichnet, dass** der Dom (55) vom Typ enthaltend einen Sitz (553) für die Dichtung (11) ist, letztere eingesetzt in diesen in provisorischer Weise, und dass der Flansch (60) ein Heizsystem (90) enthält und ein Ende (600) aufweist, das dem Endabschnitt (50) des Rohres (51) zugewandt und wenigstens mit zwei Stufen (602, 603) ausgeformt ist, das heisst einer äusseren Stufe (602) und einer inneren Stufe (603), und bei welchem die vertikale Wand der äusseren Stufe (602) zusammen mit der horizontalen oberen Wand der darunter liegenden inneren Stufe (603) und mit dem Teil der geformten inneren Oberfläche (53) der Halbformen (52), welcher, wenn die Halbformen (52) sich in der um den Dom (55) geschlossenen Position befinden, der genannten horizontalen oberen Wand der darunter liegenden inneren Stufe (603) entspricht, einen zylindrischen Sitz (700) beschreibt, der einen gleichbleibenden vorgegebenen Mindestdurchmesser hat, der grösser ist als der Nenndurchmesser des zweiten Abschnittes (552) des Doms von grösserem Durchmesser, wobei der genannten zylindrische Sitz (700) eine Stärke ähnlich wie die der Kante (62) des Endabschnittes (50) des Rohres (51) aufweist, wobei der zylindrische Sitz (700) dazu bestimmt ist, die genannte Kante (62) aufzunehmen und frontal mit der genannten vorderen Anschlagfläche (82) abzufangen, die durch die vertikale Wand der Stufe (602) selbst beschrieben ist; wobei die genannte darunter liegende innere Stufe (603) stromabwärts und an der Dichtung (11) liegend angeordnet ist.

2. Formwerkzeug nach Patentanspruch 1, **dadurch gekennzeichnet, dass** die Stärke der genannten inneren Stufe (603) des Flansches (60) eine solche ist, dass sie gleichzeitig die genau vorgegebene Abmessung des gleichbleibenden Mindestdurchmessers des zylindrischen Sitzes (700) zur Aufnahme der Kante (62) des Endabschnittes (50) des Rohres (50) und die Einsetzstabilität der Dichtung (11) gewährleistet.

3. Formwerkzeug nach Patentanspruch 1, **dadurch gekennzeichnet, dass** das Heizsystem (90) auf das Ende (600) konzentriert ist, welches sich in direktem Kontakt mit dem Endabschnitt (50) des Rohres (51) befindet und geeignet ist, wenigstens während des Aufziehens des Endabschnittes (50) des Rohres (51) auf den Dom (55) aktiviert zu werden.

4. Formwerkzeug nach Patentanspruch 3, **dadurch gekennzeichnet, dass** das konzentrierte Heizsystem (90) aus einem forcierten Umlauf eines erhitzten Fluids im Inneren des Flansches (60) gebildet ist, welches die Hitze ausschliesslich konzentriert auf das Ende (600) des Flansches (60) überträgt.

5. Formwerkzeug nach Patentanspruch 4, **dadurch gekennzeichnet, dass** der Flansch (60) einen Deckel (94) zum Verschliessen des Heizsystems (90) enthält.

6. Formwerkzeug nach Patentanspruch 5, **dadurch gekennzeichnet, dass** das konzentrierte Heizsystem (90) sich entlang einem zylindrischen Segment (93) des Flansches (60) erstreckt, versehen im Inneren wenigstens mit einem ersten länglichen Sitz (91) für eine erste entsprechende Leitung (910), welche entsprechend dem freien Ende desselben zylindrischen Segmentes in wenigstens einer zweiten ringförmigen Leitung (920) mündet, welche wiederum in einem zweiten umlaufenden Sitz (92) aufgenommen ist, abgegrenzt und eingeschlossen durch den Deckel (94), der mit dem genannten Ende (600) des Flansches (60) übereinstimmt, wobei die Leitungen von einem erhitzten Fluid durchlaufen werden, verteilt direkt und gleichmässig an dem Ende (600) des Flansches (60) durch eine Anzahl von kleinen Bohrungen (921), erhalten umlaufend an der zweiten ringförmigen Leitung (920) in Richtung des Endes (600) des Flansches (60).

7. Formwerkzeug nach Patentanspruch 6, **dadurch gekennzeichnet, dass** der Rücklauf des Fluids nach aussen durch einen Spalt (912) erfolgt, welcher zwischen den Leitungen (910, 920) und deren jeweiligen Sitzen (91, 92) vorhanden ist, wobei es freien Ablauf durch eine Auslassbohrung (95) findet, erhalten quer entlang dem zylindrischen Segment (93) des Flansches (60).

8. Formwerkzeug nach Patentanspruch 6, **dadurch gekennzeichnet, dass** das Ende (600) des Flansches (60), welches den Deckel (94) des zweiten umlaufenden Sitzes (92) bildet, letzterer erhalten am Ende des zylindrischen Segmentes (93) des Flansches (60) selbst, in abdichtender Weise mit dem genannten zylindrischen Segment (93) verbunden werden kann, und zwar durch ein einfaches Aufschrauben auf ein entsprechendes Gewinde (96).

9. Formwerkzeug nach Patentanspruch 8, **dadurch gekennzeichnet, dass** das Ende (600) des Flansches (60) eine dritte Stufe (601) aufweist, ausserhalb der anderen beiden und in der Lage, die gesamte Abmessung der Stärke des zylindrischen Segmentes (93) des Flansches (60) aufzunehmen, enthaltend die genannten Sitze und Leitungen.

10. Formwerkzeug nach einem jeden der Patentansprüche 5, 6, 7, 8 oder 9, **dadurch gekennzeichnet, dass** es zusätzliche Dichtungen (590) enthält, positioniert entsprechend der geformten Oberfläche (53) der Halbformen (52) und zusammenwirkend mit der äusseren Oberfläche des zylindrischen Segmentes (93).

11. Formwerkzeug nach einem beliebigen der vorstehenden Patentansprüche, **dadurch gekennzeichnet, dass** sich der Flansch (60) während des letzten Teils der Kontraktionsphase rückwärts bewegt, bis die Kante (62) vollkommen von der darunter liegenden Stufe (603) freigegeben ist, sich schnell zusammenzieht und an der geformten Oberfläche des darunter liegenden Doms (55) anliegt und sich die Halbformen (52) wieder für einen neuen Zyklus öffnen.

## Revendications

1. Tête de formage pour machines de tulipage automatique utilisant un fluide pressurisé, pour le formage permanent de tulipes comprenant un joint sur l'extrémité de tubes en matière plastique, comprenant:
- un mandrin de formage façonné (55), pouvant être inséré dans la partie terminale (50) du tube (51), comprenant une première partie antérieure (551) ayant un diamètre nominal correspondant à celui du tube (51) et une seconde partie (552) consécutive à la première et ayant un diamètre nominal supérieur, correspondant à celui de la partie terminale (50) du tube (51), le mandrin (55) étant pourvu de conduits (58), sortant de sa propre surface latérale (81), pour fournir un premier fluide pressurisé prévu pour exécuter une première phase de dilatation vers l'extérieur de la partie d'extrémité (50) du tube (51), après qu'il ait été enfilé sur le mandrin;
- au moins deux demi-moules (52), entourant le mandrin (55) et mobiles d'une première position éloignée du mandrin (55), dans laquelle leur cavité (80) reçoit ou relâche la partie d'extrémité (50) du tube (51), à une seconde position, fermée sur le mandrin (55), dans laquelle leur surface interne façonnée (53),comprenant une cavité radiale (56), pouvant délimiter extérieurement la forme d'un logement annulaire (500) de la partie terminale (50) du tube (51), où un joint d'étanchéité (11) est destiné à être placé, limite ladite première phase de dilatation et fournit des conduits (54) pour un second fluide pressurisé prévu pour exécuter une seconde phase de contraction radiale forcée vers le mandrin (55), de la même partie d'extrémité (50) du tube (51), après la première phase de dilatation;
- une flange (60) montée coaxialement et de manière coulissante par rapport au mandrin (55) et aux demi-moules (52), et ayant une surface d'arrêt frontale (82) du bord (62) de la partie terminale (50) du tube (51) au terme de son insertion sur le mandrin (55);
- des éléments d'étanchéité (59) destinés à interagir aussi bien avec la surface interne (83) qu'avec la surface externe (84) de la partie terminale (50) du tube (51), disposés respectivement aussi bien sur la surface latérale (81) du mandrin (55) que sur la surface interne (53) des demi-moules (52), en permettant audit tube (51) d'être inséré de manière étanche sur la tête opératrice (60);
- les demi-moules (52), le mandrin (55) et la flange (60) délimitant ensemble et de manière périphérique une première chambre de pressurisation (63) pouvant permettre la première phase de dilatation, positionnée entre la surface latérale (81) du mandrin (55) et la surface interne (83) du tube (51), et une seconde chambre de pressurisation (64), pouvant permettre la seconde phase de contraction, positionnée entre la surface externe (84) du tube (51) et la surface interne (53) des demi-moules (52);
**caractérisée en ce que** le mandrin (55) est du type comprenant un logement (553) pour le joint d'étanchéité (11), disposé en son intérieur auparavant de manière provisoire, et **en ce que** la flange (60) comprend un système de chauffage (90) et présente une propre extrémité (600) orientée vers la partie terminale (50) du tube (51) et conformée au moins avec un double-escalier (602, 603) ayant un escalier externe (602) et un escalier interne (603) et dans lequel la paroi verticale de l'escalier externe (602), en combinaison avec la paroi supérieure horizontale de l'escalier interne situé au-dessous (603) et avec cette partie de la surface interne façonnée (53) des demi-moules (52) qui, lorsque les demi-moules (52) sont dans la position fermée sur le mandrin (55), correspond à ladite paroi supérieure horizontale de l'escalier interne (603) situé au-dessous, identifie un logement cylindrique (700) ayant un diamètre minimum prédéterminé constant supérieur au diamètre nominal de la seconde partie (552) du mandrin avec un diamètre plus grand, ledit logement cylindrique (700) présentant son épaisseur approchant celle du bord (62) de la partie terminale (50) du tube (51), ledit logement cylindrique (700) étant destiné à recevoir et arrêter frontalement ledit bord (602) lui-même; ledit escalier interne (603) situé au-dessous étant situé en aval du joint (11) et contre ce dernier.

2. Tête opératrice selon la revendication 1, **caractérisée en ce que** l'épaisseur dudit escalier interne (603) de la flange (60) est telle qu'il assure, simultanément, l'exacte mesure prédéterminée du diamètre minimum constant du logement cylindrique (700) pour loger le bord (62) de la partie terminale (50) du tube (51) et la stabilité dans le logement du joint (11).

3. Tête opératrice selon la revendication 1, **caractérisée en ce que** le système de chauffage (90) est concentré en correspondance de sa propre extrémité (600) qui est en contact direct avec la partie terminale (50) du tube (51), pouvant être activée au moins pendant l'introduction de la partie terminale (50) du tube (51) sur le mandrin (55).

4. Tête opératrice selon la revendication 3,
**caractérisée en ce que** le système de chauffage concentré (90) est constitué d'une circulation forcée d'un fluide réchauffé à l'intérieur de la flange (60), qui transfère de la chaleur concentrée exclusivement en correspondance de l'extrémité (600) de la flange (60).

5. Tête opératrice selon la revendication 4, **caractérisée en ce que** la flange (60) comprend un couvercle (94) pour fermer le circuit de chauffage (90).

6. Tête opératrice selon la revendication 5, **caractérisée en ce que** le système de chauffage (90) concentré se développe le long d'un segment cylindrique (93) de la flange (60), pourvu intérieurement d'au moins un premier logement longitudinal (91) pour une première correspondante canalisation (910) débouchant, en correspondance de l'extrémité libre du même segment cylindrique, dans au moins une seconde canalisation annulaire (920), qui à son tour est logée sans un second logement circonférentiel (92) délimité et fermé par le couvercle (94) coïncidant avec ladite extrémité (600) de la flange (60), les canalisations étant traversées par un fluide chauffé, distribué directement et uniformément sur l'extrémité (600) de la flange (60) par l'intermédiaire d'une pluralité de petits orifices (921) obtenus circonférentiellement sur la seconde canalisation annulaire (920), dans la direction de l'extrémité (600) de la flange (60).

7. Tête opératrice selon la revendication 6, **caractérisée en ce que** le retour du fluide vers l'extérieur se produit au travers de l'espace (912) existant entre les canalisations (910, 920) et leurs respectifs logements (91, 92), en trouvant un débouché libre dans un orifice de sortie (95), obtenu transversalement le long du segment cylindrique (93) de la flange (60).

8. Tête opératrice selon la revendication 6,
**caractérisée en ce que** l'extrémité (600) de la flange (60), qui constitue le couvercle (94) du second logement circonférentiel (92) obtenu sur l'extrémité du segment cylindrique (93) de la flange (60) elle-même, peut être associée de manière étanche audit segment cylindrique (93) par un simple vissage le long d'un filetage correspondant (96).

9. Tête opératrice selon la revendication 8, **caractérisée en ce que** l'extrémité (600) de la flange (60) présente un troisième escalier (601) extérieur aux deux autres, pouvant recouvrir la dimension totale de l'épaisseur du segment cylindrique (93) de la flange (60), contenant lesdits logements et canalisations.

10. Tête opératrice selon n'importe laquelle des revendications 5, 6, 7, 8 ou 9, **caractérisée en ce qu'**elle comprend des joints d'étanchéité supplémentaires (590), positionnés en correspondance de la surface façonnée (53) des demi-moules (52) et interagissant avec la surface externe du segment cylindrique (93).

11. Tête opératrice selon n'importe laquelle des revendications précédentes, **caractérisée en ce que**, pendant la dernière partie de la phase de contraction, la flange (60) se déplace vers le bas, jusqu'à ce que le bord (62) soit complètement libéré de l'escalier (603) situé au-dessous, en se contractant rapidement et en adhérant sur la surface façonnée du mandrin (55) situé au-dessous, et les demi-moules (52) s'ouvrent de nouveau, pour un nouveau cycle.
